# EUROPÄISCHE PATENTSCHRIFT

(11) **EP 0 822 471 B1**
(45) Veröffentlichungstag und Bekanntmachung des Hinweises auf die Patenterteilung: **14.01.2004**
(21) Anmeldenummer: 97113094.3
(22) Anmeldetag: 30.07.1997
(51) Int. Cl.: G05B 19/042, G05B 19/418, H03H 11/28

(54) **Elektronisches Gerät**
Electronic device
Dispositif électronique

(30) Priorität: 31.07.1996 DE 19630892; 25.09.1996 DE 19639379
(43) Veröffentlichungstag der Anmeldung: 04.02.1998
(73) Patentinhaber: i f m electronic gmbh, D-45127 Essen (DE)
(72) Erfinder: Gohr, Andreas, Dipl.-Ing. (TH), 88212 Ravensburg (DE); Schütze, Jörg, Dipl.-Ing. (TH), 88142 Wasserburg (DE)
(74) Vertreter: Gesthuysen, von Rohr & Eggert

(56) Entgegenhaltungen:
- EP-A- 0 355 532
- DE-A- 2 010 329
- DE-A- 2 456 640
- US-A- 3 921 106
- US-A- 5 424 692
- PROF.DR. W. KRIESEL UND DR. O. W. MADELUNG: "ASI, Das Aktuator-Sensor-Interface für die Automation" 1994 , CARL HANSER VERLAG , MÜNCHEN XP002062938 Kapitel 3.1 mit Figur 3.1 & 3.2

## Beschreibung

Die Erfindung betrifft ein elektronisches Gerät als Bindeglied zwischen einem Energieversorgungs- und Datenübertragungssystem einerseits sowie mindestens einem Aktuator und/oder mindestens einem Sensor andererseits, mit einem zweipoligen System- und Geräteanschluß, mit einem zweipoligen Versorgungsausgang, mit einer Datentrennung bzw. -entkopplung zwischen dem System- und Geräteanschluß einerseits und dem Versorgungsausgang andererseits, mit einer mit dem System- und Geräteanschluß verbundenen Datenverarbeitungselektronik sowie mit einem an die Datenverarbeitungselektronik angeschlossenen mehrpoligen Datenein- und -ausgang.

Unter der Bezeichnung "Aktuator-Sensor-Interface" bzw. "ASI" ist von elf namhaften Aktuator-, Sensor- und Steuerungsherstellern sowie von zwei Hochschuleinrichtungen ein System von Hardware-Komponenten entwickelt worden, die über drei Interfaces untereinander und mit ihrer Umgebung verbunden sind (vgl. das Buch "ASI Das Aktuator-Sensor-Interface für die Automation", herausgegeben von Prof. Dr. W. Kriesel und Dr. O. W. Madelung, erschienen 1994 im Carl Hanser Verlag, München und Wien). Die Hardware-Komponenten dieses Systems sind das Übertragungssystem, Slaves und mindestens ein Master (vgl. "ASI Das Aktuator-Sensor-Interface für die Automation", aaO, S. 31, Bild 2.1). Die Erfindung befaßt sich mit einer Hardware-Komponente des in Rede stehenden Systems, nämlich mit dem elektronischen Gerät, das in diesem System mit Slave (bzw. mit ASI-Slave) bezeichnet ist.

Bei dem in Rede stehenden System dient das Übertragungssystem, auch ASI-Leitung genannt, einerseits der Energieversorgung der Slaves (und damit auch der an die Slaves angeschlossenen Aktuatoren und Sensoren) sowie der Energieversorgung des Masters, andererseits der Datenübertragung zwischen den Slaves untereinander sowie zwischen den Slaves und dem Master. Das ist der Grund dafür, warum das Übertragungssystem, um das es hier geht, einleitend als Energieversorgungs- und Datenübertragungssystem bezeichnet worden ist.

Das elektronische Gerät, um das es im Rahmen der Erfindung geht, das also bei dem in Rede stehenden System als Slave (bzw. als ASI-Slave) bezeichnet ist, stellt das Bindeglied dar zwischen dem Energieversorgungs- und Datenübertragungssystem einerseits sowie den Aktuatoren und Sensoren andererseits (vgl. "ASI .....................", aaO, S. 31, Bild 2.1, S. 48, Bild 3.1). Wie sich aus den zuvor angesprochenen Fundstellen ergibt, kann das dort als Slave (bzw. als ASI-Slave) bezeichnete elektronische Gerät ein separates Gerät sein, das einerseits an das Energieversorgungs- und Datenübertragungssystem angeschlossen wird und an das andererseits die Aktuatoren und/oder Sensoren angeschlossen werden. Gerätetechnisch kann es jedoch auch so sein, daß ein Slave und ein Aktuator oder ein Sensor oder ein Slave und mehrere Aktuatoren und/oder mehrere Sensoren zu einem Gerät zusammengefaßt sind. Das ist für das; was nachfolgend beschrieben wird, ohne Belang.

Zu dem in Rede stehenden elektronischen Gerät, wie bereits mehrfach gesagt, in dem in Rede stehenden System als Slave (oder als ASI-Slave) bezeichnet, gehören (vgl. "ASI ...............", aaO, S. 50, Bild 3.2)
ein zweipoliger System- und Geräteanschluß, mit dem das Energieversorgungs- und Datenübertragungssystem an das Gerät und das Gerät an das Energieversorgungs- und Übertragungssystem angeschlossen sind,
ein Versorgungsausgang zur Versorgung der Aktuatoren und/oder Sensoren mit elektrischer Energie, an der zuvor angegebenen Fundstelle mit Uₒᵤₜ und 0 V bezeichnet,
eine Datentrennung bzw. -entkopplung zwischen dem System- und Geräteanschluß einerseits und dem Versorgungsausgang andererseits, die den Energiepfad und den Datenpfad voneinander trennt, an der zuvor angegebenen Fundstelle mit Stromversorgung bzw. Teil der Stromversorgung bezeichnet,
eine mit dem System- und Geräteanschluß verbundene Datenverarbeitungselektronik, zu der gemäß der zuvor angegebenen Fundstelle u. a. ein Sender, ein Empfänger, eine Ablaufsteuerung und ein nichtflüchtiger Speicher gehören, und
ein an die Datenverarbeitungselektronik angeschlossener mehrpoliger Datenein- und -ausgang, an der zuvor angegebenen Fundstelle mit D0, D1 ........... und P0, P1 .......... bezeichnet.

Bei dem in Rede stehenden System werden in den Slaves und im Master Daten generiert, die in Form eines Datentelegramms über das Energieversorgungs- und Datenübertragungssystem ausgetauscht werden. Daraus resultiert, daß einerseits die Slaves dem Energieversorgungs- und Datenübertragungssystem nur einen begrenzten Strom entnehmen dürfen, daß andererseits der Impedanzverlauf der Slaves über der Frequenz eine Grenzkurve nicht unterschreiten darf (vgl. "ASI ............", aaO, Abschnitt "3.3 Interface 2: Übertragungssseite des Slaves", S. 55, unten, bis S. 57 oben, insbesondere Bild 3.5 "Impedanz als Funktion der Frequenz; Grenzkurve für ASI-Slaves").

Bei dem in Rede stehenden, am Markt vorhandenen System bestehen die Slaves aus einem hochintegrierten Schaltkreis und einigen wenigen externen Bauteilen (vgl. "ASI ....................", aaO, Abschnitt 3.5 "Realisierungsbeispiel: ASI-Chip", S. 59 und 60 mit den Bildern 3.6 und 3.7). Dabei wird eine Versorgungsspannung zwischen 19 V und 25,6 V bei einem maximalen Strom von 35 mA bereitgestellt, was für einige Aktuatoren und für die überwiegende Zahl von Sensoren ausreicht. Werden größere Ströme benötigt, wird ein Parallelzweig eingerichtet, der den erhöhten Strom zur Verfügung stellt (Bild 3.7).

Im Stand der Technik ist die Datentrennung bzw. -entkopplung durch im integrierten Schaltkreis elektronisch nachgebildete Drosseln bzw., wenn höhere Ströme benötigt werden, durch Drosseln als externe Bauteile realisiert.

Die im Stand der Technik bekannten elektronischen Geräte der in Rede stehenden Art, also die Slaves bzw. die ASI-Slaves haben also in zweierlei Hinsicht eine begrenzte Einsatzmöglichkeit:
Einerseits dürfen die anzuschließenden Aktuatoren und Sensoren keine solche Impedanz haben, daß der Impedanzverlauf über der Frequenz die vorgegebene Grenzkurve unterschreitet.
Andererseits ist die mögliche Energieversorgung, sei es spannungsmäßig oder strommäßig, insbesondere für bestimmte Aktuatoren, unzureichend bzw. zumindest problematisch.

Die begrenzte Einsatzmöglichkeit der im Stand der Technik bekannten Slaves wird insbesondere dann relevant, wenn als Aktuatoren Magnetventile angeschlossen werden sollen.

Der Erfindung liegt nun die Aufgabe zugrunde, die Einsatzmöglichkeit des bekannten elektronischen Gerätes, also des bekannten Slaves, von dem die Erfindung ausgeht, zu erweitern.

Ein erfindungsgemäßes elektronisches Gerät der zuvor im einzelnen erläuterten Art ist nun zunächst dadurch gekennzeichnet, daß einem Pol des Versorgungsausgangs eine von der Datenverarbeitungselektronik steuerbare Zusatzimpedanz vorgeschaltet ist. Das gibt die Möglichkeit, an das erfindungsgemäße elektronische Gerät auch solche Aktuatoren anzuschließen, die eine so geringe Impedanz haben, daß sie an die im Stand der Technik bekannten elektronischen Geräte, also an die bekannten Slaves, nicht angeschlossen werden dürfen, weil durch ihren Anschluß der Impedanzverlauf des Gerätes über der Frequenz die vorgegebene Grenzkurve unterschritten würde, so daß die Datenübertragung nicht mehr einwandfrei funktionieren würde.

Es ist bereits darauf hingewiesen worden, daß bei dem im Stand der Technik bekannten elektronischen Gerät, von dem die Erfindung ausgeht, dann, wenn höhere Ströme für die Energieversorgung bestimmter Aktuatoren benötigt werden, insbesondere wenn als Aktuatoren Magnetventile angeschlossen werden sollen, die Datentrennung bzw. -entkopplung zwischen dem System- und Geräteanschluß einerseits und dem Versorgungsausgang andererseits durch Drosseln realisiert ist, die als externe Bauelemente, zusätzlich zum integrierten Schaltkreis, vorgesehen sind (vgl. "ASI ..............", aaO, S. 59, letzter Absatz, S. 60, Bild 3.7). Gleichwohl kann die dadurch mögliche Energieversorgung für bestimmte Aktuatoren, insbesondere wenn als Aktuatoren Magnetventile angeschlossen werden sollen, spannungsmäßig oder strommäßig unzureichend oder zumindest problematisch sein. Deshalb ist ein erfindungsgemäßes elektronisches Schaltgerät der hier in Rede stehenden Art des weiteren, dadurch gekennzeichnet, daß der Versorgungsausgang kurzzeitig vor die Drosseln schaltbar ist oder daß ein weiterer Versorgungsausgang vorgesehen und der weitere Versorgungsausgang kurzzeitig vor die Drosseln schaltbar ist. Bei dieser Ausführungsform wird also kurzzeitig hingenommen, daß eine Datentrennung bzw. -entkopplung zwischen dem System- und Geräteanschluß einerseits und dem Versorgungsausgang bzw. dem weiteren Versorgungsausgang andererseits nicht wirksam ist. Dabei muß natürlich dafür Sorge getragen werden, daß gleichwohl die Datenübertragung über das Energieversorgungs- und Datenübertragungssystem einwandfrei funktioniert.

Bei den im Stand der Technik bekannten elektronischen Geräten, bei denen als Datentrennung bzw. -entkopplung zwischen dem System- und Geräteanschluß einerseits und dem Versorgungsausgang andererseits jeweils eine Drossel vorgesehen ist, können Stromänderungen im Lastkreis zu unzulässig hohen Überspannungen, nämlich zu unzulässig hohen Induktionsspannungen an den Drosseln führen. Deshalb sind bei den bekannten elektronischen Geräten entsprechende Schutzmaßnahmen verwirklicht, nämlich einerseits eine Schutzdiode zwischen dem System- und Geräteanschluß und der Datenverarbeitungselektronik, andererseits eine der Datenverarbeitungselektonik parallel geschaltete Zenerdiode. Die zwischen dem System- und Geräteanschluß und der Datenverarbeitungselektronik vorgesehe Schutzdiode kann jedoch dazu führen, daß für eine bestimmte Zeit keine Kommunikation zwischen dem Energieversorgungsund Datenübertragungssystem einerseits und der Datenverarbeitungselektronik andererseits - und umgekehrt - möglich ist. Deshalb ist ein erfindungsgemäßes elektronisches Schaltgerät der hier in Rede stehenden Art vorteilhafterweise weiter dadurch gekennzeichnet, daß mindestens eine weitere Schutzdiode vorgesehen ist und die weitere Schutzdiode zwischen die Anode oder die Kathode der ersten Schutzdiode einerseits und die zugeordnete Drossel andererseits geschaltet ist. Dadurch ist erreicht, daß dann, wenn durch eine dafür hinreichend große Stromänderung im Lastkreis eine Überspannung - als Induktionsspannung an den Drosseln - entsteht, die weitere Schutzdiode sperrt, die erste Schutzdiode jedoch leitend bleibt, so daß die Kommunikation zwischen dem Energieversorgungs- und Datenübertragungssystem einerseits und der Datenverarbeitungselektronik andererseits - und umgekehrt - unbeeinflußt möglich bleibt.

Im einzelnen gibt es nun verschiedene Möglichkeiten, das erfindungsgemäße elektronische Gerät auszugestalten und weiterzubilden. Solche Ausgestaltungen und

Weiterbildungen ergeben sich aus den den Patentansprüchen 1, 10 und 15 nachgeordneten Patentansprüchen und aus der folgenden Beschreibung von Ausführungsbeispielen in Verbindung mit der Zeichnung. In der Zeichnung zeigt
- Fig. 1: eine Darstellung zur Erläuterung einer ersten im Stand der Technik realisierten Möglichkeit der Energieversorgung eines Aktuators oder eines Sensors,
- Fig. 2: eine Darstellung zur Erläuterung einer zweiten im Stand der Technik realisierten Möglichkeit der Energieversorgung eines Aktuators oder eines Sensors,
- Fig. 3: eine Darstellung zur Erläuterung einer dritten im Stand der Technik realisierten Möglichkeit der Energieversorgung eines Aktuators oder eines Sensors,
- Fig. 4: eine Darstellung zur Erläuterung einer bei erfindungsgemäßen elektronischen Geräten einzuhaltenden Bedingung,
- Fig. 5: eine prinzipielle Darstellung einer ersten Ausführungsform eines erfindungsgemäßen elektronischen Gerätes,
- Fig. 6: eine Darstellung zur Erläuterung der in Fig. 5 dargestellten Ausführungsform eines erfindungsgemäßen elektronischen Gerätes,
- Fig. 7: ein Ausführungsbeispiel der in Fig. 5 prinzipiell dargestellten ersten Ausführungsform eines erfindungsgemäßen elektronischen Gerätes,
- Fig. 8 bis 11: Ausführungsbeispiele einer zweiten Ausführungsform eines erfindungsgemäßen elektronischen Gerätes,
- Fig. 12 und 13: Ausführungsbeispiele einer dritten Ausführungsform eines erfindungsgemäßen elektronischen Gerätes,
- Fig. 14: ein Ausführungsbeispiel einer vierten Ausführungsform eines erfindungsgemäßen elektronischen Gerätes und
- Fig. 15: ein Ausführungsbeispiel einer fünften Ausführungsform eines erfindungsgemäßen elektronischen Gerätes.

Das erfindungsgemäße elektronische Gerät gehört zu einem System, das im einzelnen in dem Buch "ASI Das Aktuator-Sensor-Interface für die Automation", herausgegeben von Prof. Dr. W. Kriesel und Dr. O. W. Madelung, erschienen 1994 im Carl Hanser Verlag; München und Wien, beschrieben ist. Zu diesem System gehören als Hardware-Komponenten ein Übertragungssystem, Slaves und mindestens ein Master. Die Erfindung befaßt sich mit dem elektronischen Gerät, das in dem in Rede stehenden System mit Slave (bzw. mit ASI-Slave) bezeichnet ist.

Bei dem in Rede stehenden System dient das Übertragungssystem, in dem vorgenannten Buch auch ASI-Leitung genannt, einerseits der Energieversorgung der Slaves (und damit auch der an die Slaves angeschlossenen Aktuatoren und Sensoren) sowie der Energieversorgung des Masters, andererseits der Datenübertragung zwischen den Slaves untereinander sowie zwischen den Slaves und dem Master. Folglich wird im Rahmen der Erfindung das Übertragungssystem, um das es hier geht, als Energieversorgungs- und Datenübertragungssystem bezeichnet.

Das elektronische Gerät, das Gegenstand der Erfindung ist, stellt in dem in Rede stehenden System das Bindeglied dar zwischen dem - in der Zeichnung nicht dargestellten - Energieversorgungs- und Datenübertragungssystem einerseits sowie den Aktuatoren und Sensoren andererseits.

Zu dem in Rede stehenden elektronischen Gerät gehören ein - vorzugsweise - zweipoliger System- und Geräteanschluß 1, mit dem das Energieversorgungs- und Datenübertragungssystem an das Gerät und das Gerät an das Energieversorgungs- und

Übertragungssystem angeschlossen sind, ein Versorgungsausgang 2 zur Versorgung der Aktuatoren und/oder Sensoren mit elektrischer Energie, eine Datentrennung bzw. - entkopplung zwischen dem System- und Geräteanschluß 1 einerseits und dem Versorgungsausgang 2 andererseits, die den Energiepfad und den Datenpfad voneinander trennt, eine mit dem System- und Geräteanschluß 1 verbundene Datenverarbeitungselektronik 3 und ein an die Datenverarbeitungselektronik 3 angeschlossener mehrpoliger - in der Zeichnung nicht dargestellter - Datenein- und -ausgang (vgl. "ASI ...................", aaO, S. 50, Bild 3.2).

Bei dem in Rede stehenden System bedarf die Energieversorgung der besonderen Beachtung. Einerseits erfolgt die Energieversorgung der in Rede stehenden Geräte. also der Slaves, und der an diese Geräte angeschlossenen Aktuatoren und Sensoren sowie die Energieversorgung des Masters über das Energieversorgungs- und Datenübertragungssystem; die für alle in Rede stehenden Geräte und die daran angeschlossenen Aktuatoren und Sensoren sowie für den Master zur Verfügung stehende Energie ist also insgesamt begrenzt. Andererseits ist die Energieversorgung der an das in Rede stehende Gerät anschließbaren Aktuatoren und Sensoren durch das elektronische Gerät selbst begrenzt, - sei es durch den zu dem elektronischen Gerät gehörenden hochintegrierten Schaltkreis, sei es durch als externe Bauteile vorgesehene Drosseln (vgl. "ASI .............", aaO, S. 59 und 60 mit den Bildern 3.6 und 3.7).

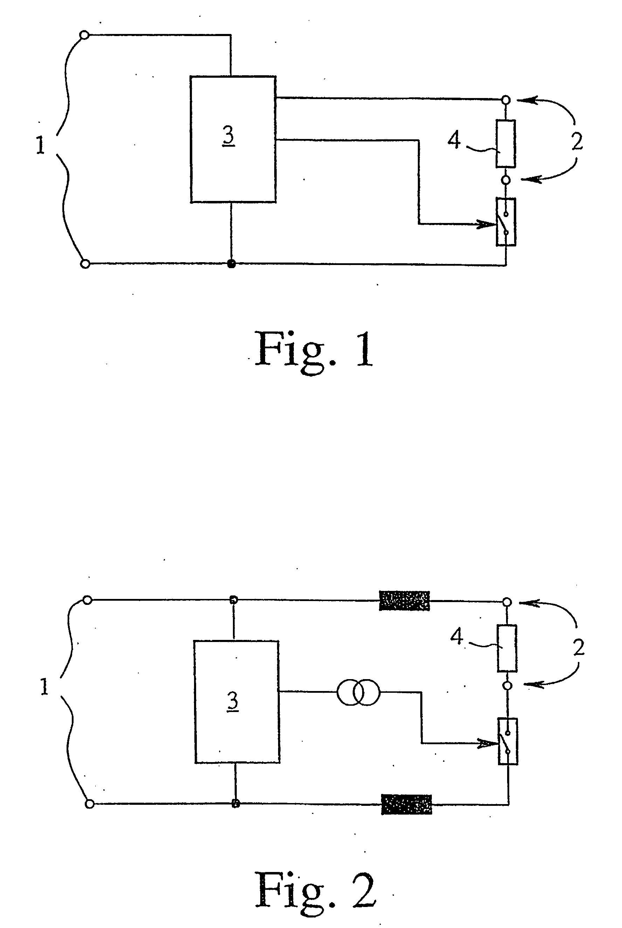

Reicht für die Energieversorgung anzuschließender Aktuatoren und Sensoren der Strom aus, der dem hochintegrierten Schaltkreis entnommen werden kann, so erfolgt die Energieversorgung eines an das Gerät angeschlossenen Aktuators 4 in der Weise. wie das in Fig. 1 dargestellt ist (vgl. "ASI .....................", aaO, S. 50, Bild 3.2); der der Energieversorgung des Aktuators 4 dienende Strom wird dem Schaltkreis des elektronischen Gerätes entnommen.

Wenn für die Energieversorgung anzuschließender Aktuatoren und Sensoren der Strom nicht ausreicht, der dem hochintegrierten Schaltkreis entnommen werden kann. so erfolgt die Energieversorgung eines an das Gerät angeschlossenen Aktuators 4 in der Weise, wie das in Fig. 2 dargestellt ist (vgl. "ASI ....................", aaO, S. 60, Bild 3.7); der der Energieversorgung des Aktuators 4 dienende Strom wird über einen Parallelzweig entnommen, in dem sich Drosseln 5 befinden.

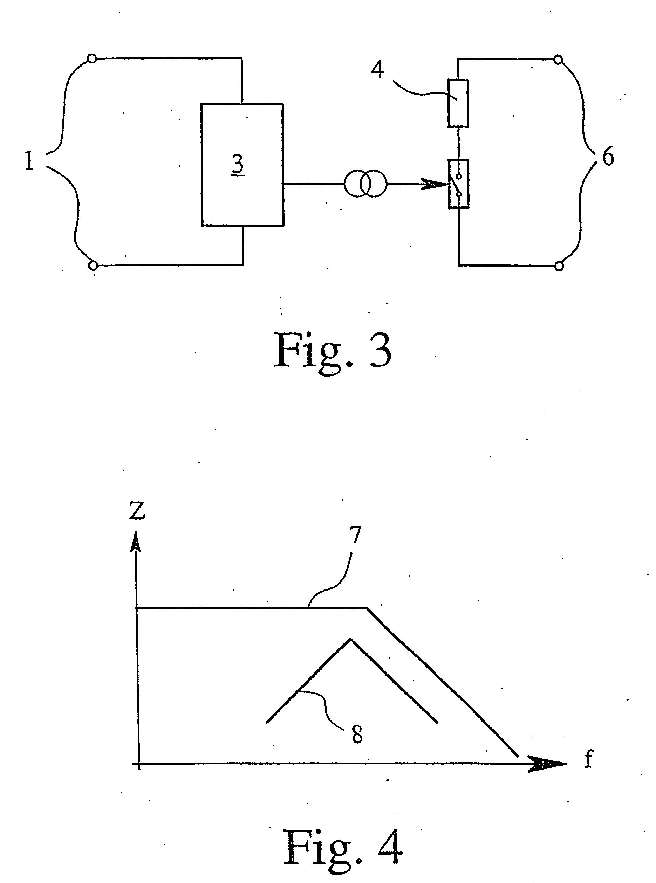

Wird für die Energieversorgung anzuschließender Aktuatoren und Sensoren ein Strom benötigt, der auch dem in Fig. 2 dargestellten Parallelzweig - mit den Drosseln 5 - nicht entnommen werden kann, so ist eine externe Energieversorgung 6 erforderlich, wie das in Fig. 3 dargestellt ist. In diesem Fall dient also das - nicht dargestellte - Energieversorgungs- und Datenübertragungssystem in bezug auf den Aktuator 4 nur als Datenübertragungssystem.

Wie einleitend bereits ausgeführt, werden bei dem System, zu dem das in Rede stehende elektronische Gerät gehört, von diesen Geräten und vom Master generierte Daten in Form eines Datentelegramms über das Energieversorgungs- und Datenübertragungssystem ausgetauscht. Damit die Datentelegramme nicht so beeinflußt werden, daß die einzelnen Daten nicht mehr erkannt werden können, darf, wie das in Fig. 4 - Impedanz Z über der Frequenz f - schematisch dargestellt ist, der Impedanzverlauf 7 der Geräte über der Frequenz eine Grenzkurve 8 nicht unterschreiten (vgl. "ASI .................", aaO, S. 57, Bild 3.5).

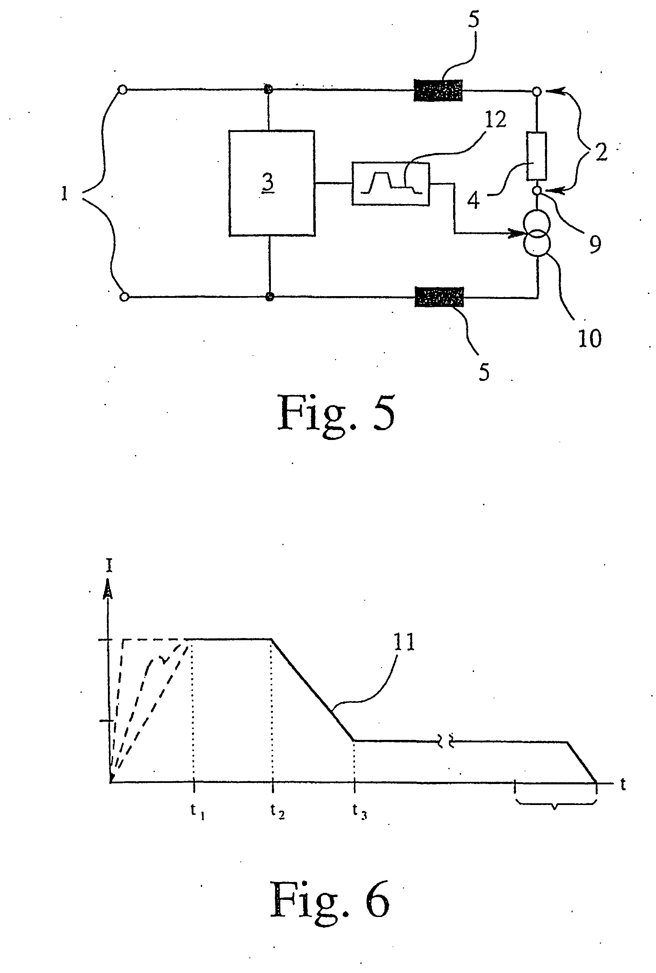

Wie nun Fig. 5 zeigt, ist bei einer ersten Ausführungsform eines erfindungsgemäßen elektronischen Gerätes einem Pol 9 des Versorgungsausgangs 2 eine steuerbare Zusatzimpedanz 10 vorgeschaltet. Das gibt nun die Möglichkeit, an das erfindungsgemäße elektronische Gerät auch solche Aktuatoren 4 anzuschließen, die eine so geringe Impedanz haben, daß sie an die im Stand der Technik bekannten elektronischen Geräte, also an die bekannten Slaves, nicht angeschlossen werden dürfen, weil durch ihren Anschluß der Impedanzverlauf des Gerätes über der Frequenz die vorgegebene Grenzkurve (Grenzkurve 8 in Fig. 4) unterschritten würde, so daß die Datenübertragung nicht mehr einwandfrei funktionieren würde, vielmehr das Datentelegramm so beeinträchtigt würde, daß die Daten nicht mehr zuverlässig erkannt werden könnten.

Grundsätzlich bestehen verschiedene Möglichkeiten der Realisierung der erfindungsgemäß vorgesehenen Zusatzimpedanz 10. Zum Beispiel könnte nun als Zusatzimpedanz 10 ein steuerbarer Widerstand verwendet werden. Vorzugsweise ist jedoch die Zusatzimpedanz 10, wie das in Fig. 5 angedeutet ist, als Stromsenke ausgeführt.

Erfindungsgemäß ist nicht einfach eine - konstante - Zusatzimpedanz vorgesehen, vielmehr ist eine steuerbare Zusatzimpedanz 10 vorgesehen. Folglich empfiehlt es sich, die Zusatzimpedanz 10 strombedarfsgerecht zu steuern. Damit ist gemeint, daß durch die Steuerung der Zusatzimpedanz 10 über den Aktuator 4 und die Zusatzimpedanz 10 ein solcher Strom fließen soll, wie er sinnvollerweise zur Verfügung stehen soll.

Das erfindungsgemäße elektronische Gerät ist in besonderem Maße dazu geeignet, die Energieversorgung für ein Magnetventil als Aktuator 4 zur Verfügung zu stellen. Für einen solchen Aktuator 4 sollte der in Fig. 6 schematisch dargestellte Stromverlauf 11, Strom I über der Zeit t, realisiert werden. Dieser Stromverlauf 11 wird durch den in Fig. 5 schematisch dargestellten Steuersignalverlauf 12 erreicht. Die Zusatzimpedänz 10 wird also zunächst so gesteuert, daß sich beim Einschalten der Zusatzimpedanz 10 eine begrenzte Stromanstiegsgeschwindigkeit ergibt, - bis zum Zeitpunkt t₁ in Fig. 6. Bis zum Zeitpunkt t₂ in Fig. 6 soll dann der Strom einen konstanten Wert haben, so daß sichergestellt ist, daß das als Aktuator 4 vorgesehene Magnetventil mit Sicherheit eingeschaltet ist; dieser Strom sei Anfangsstrom genannt. Ist das als Aktuator 4 vorgesehene Magnetventil mit Sicherheit betätigt, so wird nur noch ein Dauerstrom benötigt, der wesentlich geringer ist als der Anfangsstrom. Vorzugsweise wird die Zusatzimpedanz 10 so gesteuert, daß der Übergang vom relativ hohen Anfangsstrom zum wesentlich geringeren Dauerstrom mit einer begrenzten Stromabfallgeschwindigkeit erfolgt; das ist in Fig. 6 für den Zeitraum zwischen dem Zeitpunkt t₂ und dem Zeitpunkt t₃ dargestellt.

Daß und warum bei einem Magnetventil als Aktuator 4 der Strom I über der Zeit t den in Fig. 6 dargestellten Stromverlauf 11 haben soll, ist dem Fachmann bekannt, so daß sich hier diesbezügliche Ausführungen erübrigen.

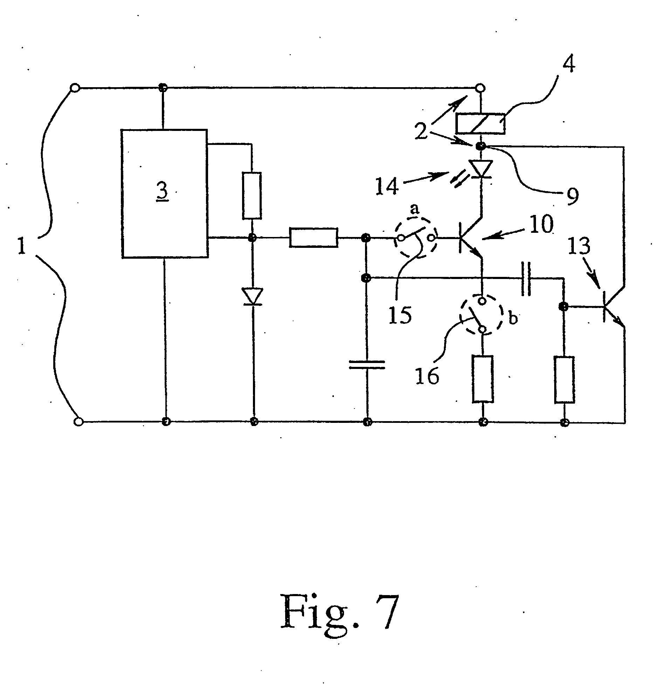

Das erfindungsgemäße elektronische Gerät bietet, wie im einzelnen zuvor erläutert. die Möglichkeit des Anschlusses von Aktuatoren, die eine so geringe Impedanz haben, daß sie an die im Stand der Technik bekannten elektronischen Geräte nicht angeschlossen werden dürfen. Natürlich ist das erfindungsgemäße Gerät auch dann einsetzbar, wenn Aktuatoren angeschlossen werden, die eine hinreichend große Impedanz haben. Folglich ist bei dem in Fig. 7 dargestellten Ausführungsbeispiel der prinzipiell in Fig. 5 dargestellten Ausführungsform eines erfindungsgemäßen elektronischen Schaltgerätes vorgesehen, daß die Zusatzimpedanz 10 dann bzw. für die Zeit. wenn die Zusatzimpedanz 10 nicht benötigt wird, durch einen der Zusatzimpedanz 10 parallelgeschalteten steuerbaren Kurzschlußschalter 13 kurzschließbar ist. Das hat insbesondere den Vorteil, daß die Zusatzimpedanz 10 nur dann Energie verbraucht, wenn ihre Wirksamkeit aus den erläuterten Gründen erforderlich ist.

In dem in Fig. 7 dargestellten Ausführungsbeispiel der ersten Ausführungsform eines erfindungsgemäßen elektronischen Gerätes ist in Reihe zu der Zusatzimpedanz 10 - und damit auch in Reihe zum Aktuator 4 - eine Leuchtdiode 14 geschaltet. Bei diesem Ausführungsbeispiel ist deshalb die Reihenschaltung aus der Zusatzimpedanz 10 und der Leuchtdiode 14 durch den Kurzschlußschalter 13 kurzschließbar.

Für den Fachmann ist aus Fig. 7 erkennbar, daß bei dem dort dargestellten Ausführungsbeispiel der ersten Ausführungsform eines erfindungsgemäßen elektronischen Gerätes zusätzlich zu dem Strom, der über den Aktuator 4 fließt, noch der Steuerstrom fließt, der zum Steuern der Zusatzimpedanz 10 benötigt wird. Dieser Steuerstrom wird dann natürlich nicht benötigt, wenn die Zusatzimpedanz 10 bzw. die Reihenschaltung aus der Zusatzimpedanz 10 und der Leuchtdiode 14 über den Kurzschlußschalter 13 kurzgeschlossen ist. Folglich empfiehlt es sich, die Steuerstrecke der steuerbaren Zusatzimpedanz 10 für die Zeit, während der die Zusatzimpedanz 10 bzw. die Reihenschaltung aus der Zusatzimpedanz 10 und der Leuchtdiode 14 kurzgeschlossen ist, stromlos zu schalten. Dazu ist in Fig. 7 angedeutet, und zwar bei a und b, daß für das stromlos Schalten der Steuerstrecke der steuerbaren Zusatzimpedanz 10 ein Hilfsschalter 15 bzw. 16 vorgesehen sein kann; natürlich reicht für das Stromlosschalten der Steuerstrecke der steuerbaren Zusatzimpedanz 10 der Hilfsschalter 15 oder der Hilfsschalter 16.

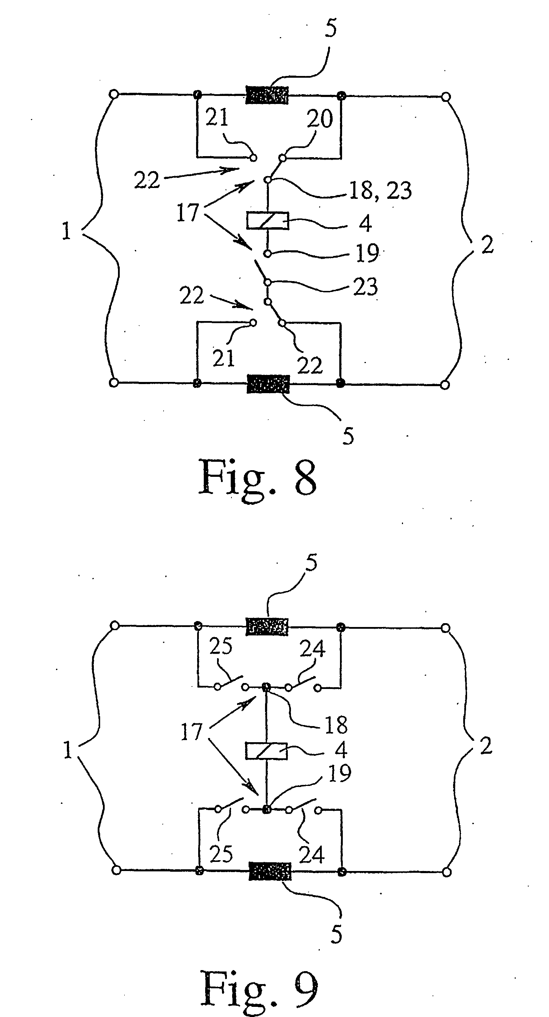

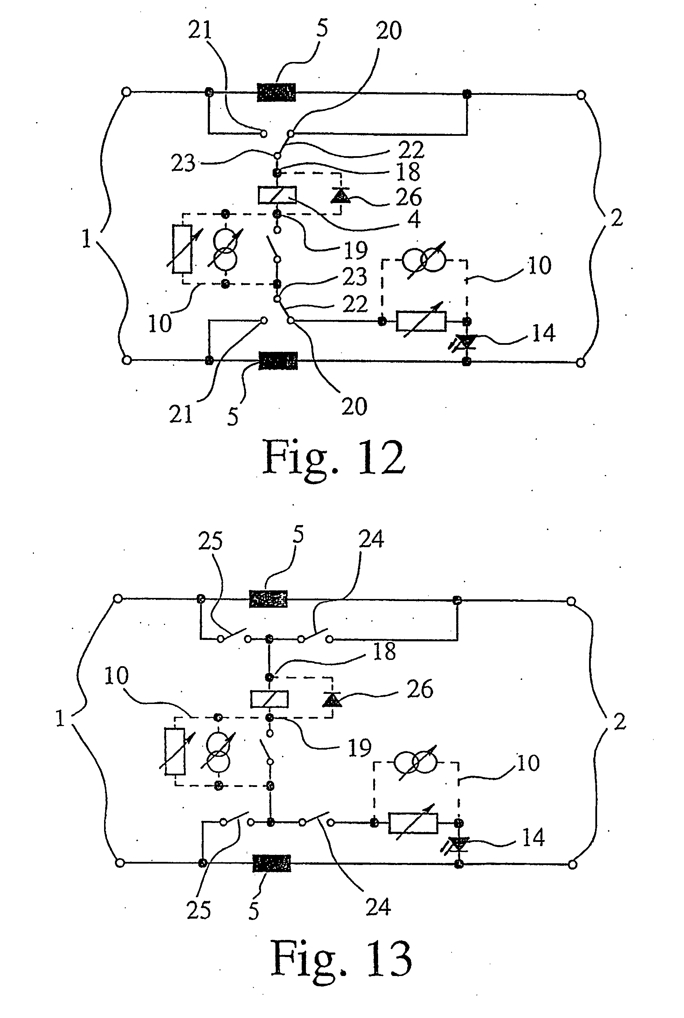

Für die in den Fig. 8 bis 11 dargestellten Ausführungsbeispiele einer zweiten Ausführungsform eines erfindungsgemäßen elektronischen Gerätes und für die in den Fig. 12 und 13 dargestellten Ausführungsbeispiele einer dritten Ausführungsform eines erfindungsgemäßen elektronischen Gerätes gilt zunächst, wie das auch die Fig. 5 und 7 zeigen, daß als Datentrennung bzw. -entkopplung zwischen dem System- und Geräteanschluß einerseits und dem Versorgungsausgang 2 andererseits jeweils eine

Drossel 5 vorgesehen ist. Bei diesen elektronischen Schaltgeräten ist nun ein weiterer Versorgungsausgang 17 vorgesehen und der weitere Versorgungsausgang 17 kurzzeitig vor die Drosseln 5 schaltbar; "vor die Drosseln 5" meint zwischen dem System-Geräteanschluß 1 und den Drosseln 5. (Alternativ, statt der Realisierung eines weiteren Versorgungsausgangs 17, könnte auch der Versorgungsausgang 2 kurzzeitig vor. die Drosseln 5 schaltbar sein.) Bei diesen Ausführungsformen wird also kurzzeitig hingenommen, daß eine Datentrennung bzw. -entkopplung zwischen dem Systemund Geräteanschluß 1 einerseits und dem weiteren Versorgungsausgang 17 (bzw. dem Versorgungsausgang 2) andererseits nicht wirksam ist. Dabei muß natürlich dafür Sorge getragen werden, daß gleichwohl die Datenübertragung über das Energieversorgungs- und Datenübertragungssystem einwandfrei funktioniert. Im übrigen wird die zuvor erläuterte Maßnahme im einzelnen so realisiert, daß zuerst ein Pol 18 des weiteren Versorgungsausganges 17 und erst danach der zweite Pol 19 des weiteren Versorgungsausgangs 17 kurzzeitig vor die zugeordnete Drossel 5 schaltbar ist.

Im Ausführungsbeispiel nach Fig. 8 sind an jede Drossel 5 einerseits der Öffnerkontakt 20 und andererseits der Schließerkontakt 21 eines Wechselschalters 22 angeschlossen. Der Hauptkontakt 23 des oberen Wechselschalter 22 stellt den Pole 18 des weiteren Versorgungsausgangs 17 dar. Zwischen dem Hauptkontakt 23 des unteren Wechselschalters 22 und dem Pol 19 des weiteren Versorgungsausgangss 17 ist noch ein nicht bezeichneter Schalter vorgesehen, der der Einschaltung des Aktuators 4 dient.

Im Ausführungsbeispiel nach Fig. 9 ist jeder Drossel 5 die Reihenschaltung von zwei Kommutierungsschaltern 24, 25 parallelgeschaltet. Die Verbindungen der beiden Kommutierungsschalter 24, 25 stellen den Pol 18 bzw. den Pol 19 des weiteren Versorgungsausgangs 17 dar. Dabei sind die jeweils zu einer Reihenschaltung gehörenden Kommutierungsschalter 24, 25 so gegeneinander verriegelt, daß nicht beide Kommutierungsschalter 24, 25 gleichzeitig geschlossen sein können.

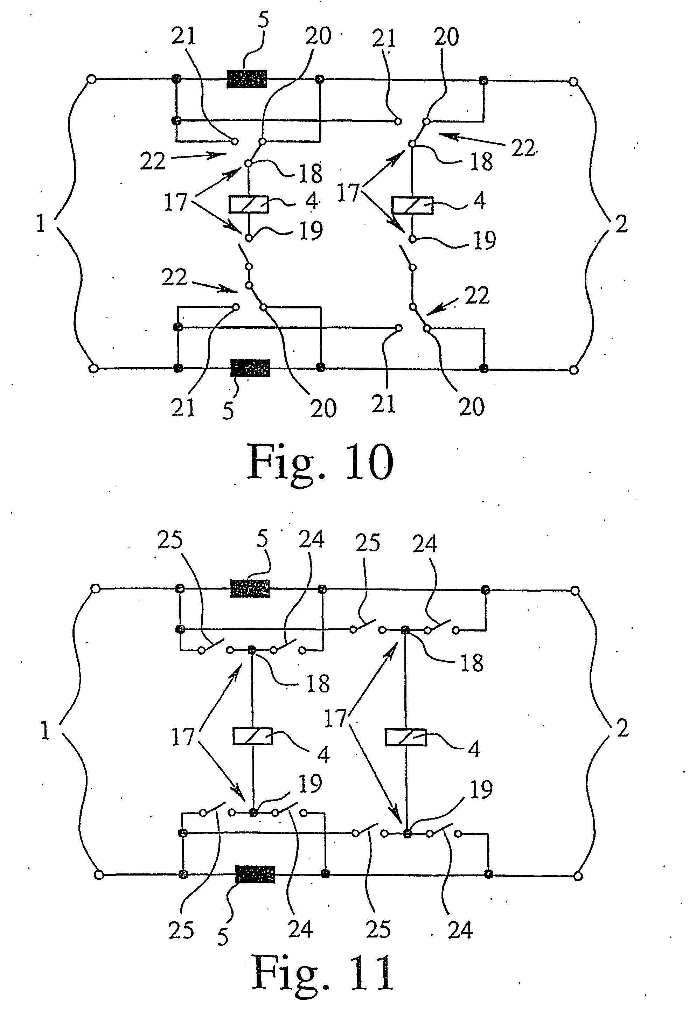

Die Ausführungsbeispiele in den Fig. 10 und 11 entsprechen den Ausführungsbeispielen in den Fig. 8 und 9, - mit dem Unterschied, daß bei den Ausführungsbeispielen in den Fig.10 und 11 jeweils zwei weitere Versorgungsausgänge 17 realisiert sind.

Weiter oben ist angedeutet worden, daß die zuletzt beschriebenen Maßnahmen - Vorsehen eines weiteren Versorgungsausgangs 17 und kurzzeitiges Schalten des weiteren Versorgungsausgangs 17 vor die Drosseln 5 - realisiert werden können, ohne daß die weiter oben beschriebene Maßnahme "steuerbare Zusatzimpedanz 10" realisiert ist. Entsprechende Ausführungsbeispiele zeigen die Fig. 8 bis 11. Bei erfindungsgemäßen elektronischen Schaltgeräten können jedoch auch die beiden zuvor angesprochenen Maßnahmen zusammen verwirklicht werden. Entsprechende Ausführungsbeispiele zeigen die Fig. 12 und 13, wobei das Ausführungsbeispiel nach Fig. 12 dem Ausführungsbeispiel nach Fig. 8, das Ausführungsbeispiel nach Fig. 13 dem Ausführunasbeispiel nach Fig. 9 entspricht. Jeweils angedeutet sind steuerbare Zusatzimpedanzen 10, realisiert als steuerbarer Widerstand oder als steuerbare Stromsenke. Im übrigen zeigen die Fig. 12 und 13 noch, daß dem Aktuator 4, realisiert als Magnetventil, jeweils eine Freilaufdiode 26 parallelgeschaltet ist, deren Zweck jeder Fachmann kennt. Natürlich könnte auch bei den anderen Ausführungsbeispielen eine Freilaufdiode vorgesehen werden.

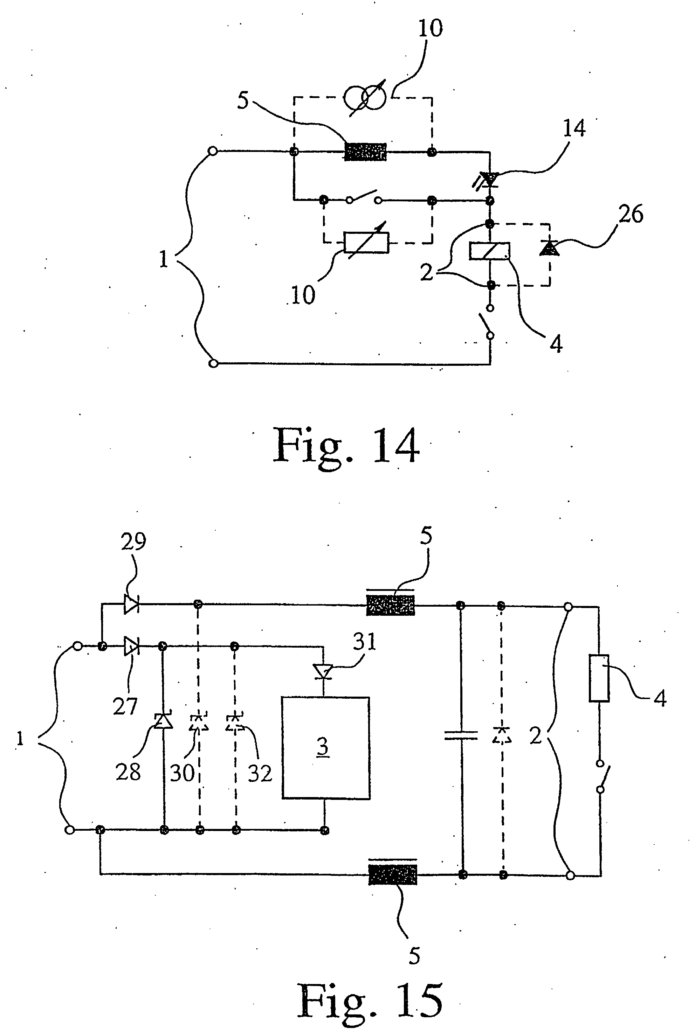

Fig. 14 zeigt ein Ausführungsbeispiel einer vierten Ausführungsform eines erfindungsgemäßen elektronischen Gerätes, bei der nicht, wie bei den Ausführungsbeispielen nach den Fig. 8 bis 13, ein weiterer Versorgungsausgang 17, sondern nur der Versorgungsausgang 2 vorgesehen ist. Bei diesem Ausführungsbeispiel ist nur eine Drossel 5 vorgesehen und ist der Drossel 5 bzw. der Reihenschaltung aus der Drossel 5 und der Leuchtdiode 14 eine steuerbare Zusatzimpedanz 10 parallelgeschaltet, realisiert als steuerbare Stromsenke oder als steuerbarer Widerstand.

Schließlich zeigt Fig. 15 ein Ausführungsbeispiel einer fünften Ausführungsform eines erfindungsgemäßen elektronischen Gerätes, bei der die weiter oben erläuterten Schutzmaßnahmen verwirklicht sind. Zunächst ist zwischen dem System- und Geräteanschluß 1 und der Datenverarbeitungselektronik 3 eine Schutzdiode 27 vorgesehen, wobei die Anode der Schutzdiode 27 an den System- und Geräteanschluß 1 und die Kathode der Schutzdiode 27 an die Datenverarbeitungselektronik 3 angeschlossen ist. Der Datenverarbeitungselekronik 3 ist eine Zehnerdiode 28 parallelgeschaltet. Erfindungsgemäß ist eine weitere Schutzdiode 29 vorgesehen. Die weitere Schutzdiode 29 ist zwischen die Anode der ersten Schutzdiode 27 einerseits und die zugeordnete Drossel 5 andererseits geschaltet; die weitere Schutzdiode 29 könnte ohne weiteres auch zwischen die Kathode der ersten Schutzdiode 27 einerseits und die zugeordnete Drossel 5 andererseits geschaltet sein.

Wäre im Ausführungsbeispiel nach Fig. 15 die weitere Schutzdiode 29 nicht vorgesehen, so könnte die zwischen dem System und Geräteanschluß 1 und der Datenverarbeitungselektronik 3 vorgesehene erste Schutzdiode 27 dazu führen, daß für eine bestimmte Zeit keine Kommunikation zwischen dem Energieversorgungs- und Datenübertragungssystem einerseits und der Datenverarbeitungselekronik 3 andererseits - und umgekehrt - möglich ist. Dadurch, daß erfindungsgemäß die weitere Schutzdiode 29 in der im einzelnen erläuterten Weise vorgesehen ist, ist erreicht, daß dann, wenn durch eine dafür hinreichend große Stromänderung im Lastkreis eine Überspannung - als Induktionsspannung an den Drosseln 5 - entsteht, die weitere Schutzdiode 29 sperrt, die erste Schutzdiode 27 jedoch leitend bleibt, so daß die Kommunikation zwischen dem Energieversorgungs- und Datenübertragungssystem einerseits und der Datenverarbeitungselektronik andererseits - und umgekehrt - unbeeinflußt möglich bleibt.

Bei dem in Fig. 15 dargestellten Ausführungsbeispiel einer fünften Ausführungsform eines erfindungsgemäßen elektronischen Schaltgerätes sind noch weitere Schutzmaßnahmen verwirklicht:

Zunächst ist zwischen der Verbindung der weiteren Schutzdiode 29 und der Drossel 5 einerseits und dem der ersten Schutzdiode 27 fernen Anschluß der Datenverarbeitungselekronik 3 andererseits eine weitere Zenerdiode 30 vorgesehen. Das Vorsehen dieser weiteren Zenerdiode 30 macht die erste Zenerdiode 28 nicht mehr unbedingt erforderlich.

Im übrigen ist zwischen der Kathode der ersten Schutzdiode 27 und der Datenverarbeitungselektronik 3 eine dritte Schutzdiode 31 vorgesehen. In bezug auf die Datenverarbeitungselekronik 3 sind die erste Schutzdiode 27 und die dritte Schutzdiode 31 in Reihe geschaltet; die Durchlaßrichtung der dritten Schutzdiode 31 ist also gleich der Durchlaßrichtung der ersten Schutzdiode 27.

Schließlich ist in Fig. 15 eine dritte Zenerdiode 32 angedeutet, parallel zu der Reihenschaltung aus der dritten Schutzdiode 31 und der Datenverarbeitungselektronik 3. Wird für die dritte Zenerdiode 32 eine Schottky-Diode verwendet, so kann unter Umständen auf die erste Zenerdiode 28, die weitere Zenerdiode 30 und die dritte Schutzdiode 31 verzichtet werden.

## Patentansprüche

1. Elektronisches Gerät als Bindeglied zwischen einem Energieversorgungs- und Datenübertragungssystem einerseits sowie mindestens einem Aktuator und/oder mindestens einem Sensor andererseits, mit einem zweipoligen System- und Geräteanschluß, mit einem zweipoligen Versorgungsausgang, mit einer Datenentkopplung zwischen dem System- und Geräteanschluß einerseits und dem Versorgungsausgang andererseits, mit einer mit dem System- und Geräteanschluß verbundenen Datenverarbeitungselektronik sowie mit einem an die Datenverarbeitungselektronik angeschlossenen mehrpoligen Datenein- und -ausgang,
**dadurch gekennzeichnet,**
**daß** einem Pol (9) des Versorgungsausgangs (2) eine von der Datenverarbeitungselektronik (3) steuerbare Zusatzimpedanz (10) vorgeschaltet ist.

2. Elektronisches Gerät nach Anspruch 1, **dadurch gekennzeichnet, daß** die Zusatzimpedanz (10) als Stromsenke ausgeführt ist.

3. Elektronisches Gerät nach Anspruch 1 oder 2, **dadurch gekennzeichnet, daß** die Zusatzimpedanz (10) strombedarfsgerecht steuerbar ist.

4. Elektronisches Gerät nach Anspruch 3, **dadurch gekennzeichnet, daß** die Zusatzimpedanz (10) so gesteuert wird, daß sich beim Einschalten der Zusatzimpedanz (10) eine begrenzte Stromanstiegsgeschwindigkeit ergibt.

5. Elektronisches Gerät nach Anspruch 3 oder 4, **dadurch gekennzeichnet, daß** die Zusatzimpedanz (10) so gesteuert wird, daß nach einer Anfangsphase mit einem relativ hohen Anfangsstrom ein Dauerstrom fließt, der wesentlich geringer ist als der Anfangsstrom.

6. Elektronisches Gerät nach Anspruch 5, **dadurch gekennzeichnet, daß** die Zusatzimpedanz (10) so gesteuert wird, daß der Übergang vom relativ hohen Anfangsstrom zum relativ geringen Dauerstrom mit einer begrenzten Stromabfallgeschwindigkeit erfolgt.

7. Elektronisches Gerät nach einem der Ansprüche 1 bis 6, **dadurch gekennzeichnet, daß** die Zusatzimpedanz (10) durch einen der Zusatzimpedanz (10) parallelgeschalteten steuerbaren Kurzschlußschalter ( 13) kurzschließbar ist.

8. Elektronisches Gerät nach Anspruch 7, **dadurch gekennzeichnet, daß** in Reihe zu der Zusatzimpedanz (10) eine Leuchtdiode (14) geschaltet ist und daß die Reihenschaltung aus der Zusatzimpedanz (10) und der Leuchtdiode (14) durch den Kurzschlüßschalter (13) kurzschließbar ist.

9. Elektronisches Gerät nach Anspruch 7 oder 8, **dadurch gekennzeichnet, daß** die Steuerstrecke der steuerbaren Zusatzimpedanz (10) für die Zeit, während der die Zusatzimpedanz (10) kurzgeschlossen ist, stromlos schaltbar ist.

10. Elektronisches Gerät nach einem der Ansprüche 1 bis 9, wobei als Datenentkopplung zwischen dem System- und Geräteanschluß einerseits und dem Versorgungsausgang andererseits jeweils eine Drossel vorgesehen ist,
**dadurch gekennzeichnet,**
**daß** der Versorgungsausgang kurzzeitig vor die Drosseln schaltbar ist oder daß ein weiterer Versorgungsausgang (17) vorgesehen und der weitere Versorgungsausgang (17) kurzzeitig vor die Drosseln (5) schaltbar ist.

11. Elektronisches Gerät nach Anspruch 10, **dadurch gekennzeichnet, daß** zuerst ein Pol des Versorgungsausgangs oder ein Pol (18) des weiteren Versorgungsausgangs (17) und erst danach der zweite Pol des Versorgungsausgangs bzw. der zweite Pol (19) des weiteren Versorgungsausgangs (17) kurzzeitig vor die zugeordnete Drossel (5) schaltbar ist.

12. Elektronisches Gerät nach Anspruch 10 oder 11, **dadurch gekennzeichnet, daß** an jede Drossel (5) einerseits der Öffnerkontakt (20) und andererseits der Schließerkontakt (21) eines Wechselschalters (22) angeschlossen sind und die Hauptkontakte (23) der Wechselschalter (22) den Versorgungsausgang bzw. den weiteren Versorgungsausgang (17) darstellen.

13. Elektronisches Gerät nach Anspruch 10 oder 11, **dadurch gekennzeichnet, daß** jeder Drossel (5) die Reihenschaltung von zwei Kommutierungsschaltern (24, 25) parallelgeschaltet ist und die Verbindungen der beiden Kommutierungsschalter (24, 25) jeweils einen Pol des Versorgungsausgangs bzw. jeweils einen Pol (18, 19) des weiteren Versorgungsausgangs (17) darstellen.

14. Elektronisches Gerät nach Anspruch 13, **dadurch gekennzeichnet, daß** die jeweils zu einer Reihenschaltung gehörenden Kommutierungsschalter (24, 25) so gegeneinander verriegelt sind, daß nicht beide Kommutierungsschalter (24, 25) gleichzeitig geschlossen sein können.

15. Elektronisches Gerät nach einem der Ansprüche 1 bis 14, wobei als Datenentkopplung zwischen dem System- und Geräteanschluß einerseits und dem Versorgungsausgang andererseits jeweils eine Drossel vorgesehen ist und zwischen dem System- und Geräteanschluß einerseits und der Datenverarbeitungselektronik andererseits eine Schutzdiode vorgesehen ist,
**dadurch gekennzeichnet,**
**daß** mindestens eine weitere Schutzdiode (29) vorgesehen ist und die weitere Schutzdiode (29) zwischen die Anode oder die Kathode der ersten Schutzdiode (27) einerseits und die zugeordnete Drossel (5) andererseits geschaltet ist.

16. Elektronisches Gerät nach Anspruch 15, **dadurch gekennzeichnet, daß** zwischen der Verbindung der weiteren Schutzdiode (29) und der Drossel (5) einerseits und dem der ersten Schutzdiode (27) fernen Anschluß der Datenverarbeitungselektronik (3) andererseits eine weitere Zenerdiode (30) vorgesehen ist.

17. Elektronisches Gerät nach Anspruch 15 oder 16, **dadurch gekennzeichnet, daß** zwischen der Kathode der ersten Schutzdiode (27) und der Datenverarbeitungselektronik (3) eine dritte Schutzdiode (31) vorgesehen ist.

18. Elektronisches Gerät nach einem der Ansprüche 15 bis 17, **dadurch gekennzeichnet, daß** zwischen der Kathode der ersten Schutzdiode (27) und dem der ersten Schutzdiode (27) fernen Anschluß der Datenverabeitungselektronik (3) eine dritte Zenerdiode (32) vorgesehen ist.

## Claims

1. An electronic device as a link between a power supply and data transmission system and at least one actuator and/or at least one sensor, having a two-pin system and device terminal, having a two-pin supply output, having a data disconnection and/or decoupling between the system and device terminal and the supply output, having data processing electronics connected to the system and device terminal, and having a multi-pin data input and output connected to the data processing electronics,
**characterized in that**
an auxiliary impedance (10), which is controllable by the data processing electronics (3), is connected upstream from one pin (9) of the supply output (2).

2. The electronic device according to Claim 1,
**characterized in that** the auxiliary impedance (10) is implemented as a current sink.

3. The electronic device according to Claim 1 or 2, **characterized in that** the auxiliary impedance (10) is controllable to meet current demand.

4. The electronic device according to Claim 3, **characterized in that** the auxiliary impedance (10) is controlled in such a way that a limited rate of rise of current results when the auxiliary impedance (10) is switched on.

5. The electronic device according to Claim 3 or 4, **characterized in that** the auxiliary impedance (10) is controlled in such a way that after a starting phase having a relatively high starting current, a continuous current flows which is significantly lower than the starting current.

6. The electronic device according to Claim 5, **characterized in that** the auxiliary impedance (10) is controlled in such a way that the transition from the relatively high starting current to the relatively low continuous current occurs at a limited rate of fall of current.

7. The electronic device according to one of Claims 1 through 6, **characterized in that** the auxiliary impedance (10) may be short-circuited by a controllable short-circuit switch (13), which is connected in parallel to the auxiliary impedance (10).

8. The electronic device according to Claim 7, **characterized in that** a light emitting diode (14) is connected in series to the auxiliary impedance (10) and the series circuit made of the auxiliary impedance (10) and the light emitting diode (14) may be short-circuited by the short-circuit switch (13).

9. The electronic device according to Claim 7 or 8, **characterized in that** the control path of the controllable auxiliary impedance (10) may be deenergized for the time during which the auxiliary impedance (10) is short-circuited.

10. The electronic device according to one of Claims 1 through 9, a throttle being provided on each side as the data decoupling between the system and device terminal and the supply output,
**characterized in that**
the supply output is switchable for a short time before the throttles or that a further supply output (17) is provided and the further supply output (17) is switchable for a short time before the throttles (5).

11. The electronic device according to Claim 10, **characterized in that** first one pin of the supply output or one pin (18) of the further supply output (17) and only then the second pin of the supply output and/or the second pin (19) of the further supply output (17) is switchable for a short time before the assigned throttle (5).

12. The electronic device according to Claim 10 or 11, **characterized in that** the opening contact (20) and the closing contact (21) of a two-way switch (22) are connected to each throttle (5) and the main contacts (23) of the two-way switches (22) represent the supply output and/or the further supply output (17).

13. The electronic device according to Claim 10 or 11, **characterized in that** the series circuit of two commutating switches (24, 25) is connected in parallel to each throttle (5) and the connections of the two commutating switches (24, 25) each represent one pin of the supply output and/or each represent one pin (18, 19) of the further supply output (17).

14. The electronic device according to Claim 13, **characterized in that** the particular commutating switches (24, 25) assigned to the series circuit are locked against one another in such a way that both commutating switches (24, 25) may not be closed simultaneously.

15. The electronic device according to one of Claims 1 through 14, a throttle being provided in each case as the data decoupling between the system and device terminal and the supply output and a damping diode being provided between the system and device terminal and the data processing electronics,
**characterized in that**
at least one further damping diode (29) is provided and the further damping diode (29) is connected between the anode or the cathode of the first damping diode (27) and the assigned throttle (5).

16. The electronic device according to Claim 15, **characterized in that** a further Zener diode (30) is provided between the connection of the further damping diode (29) and the throttle (5) and the terminal of the data processing electronics (3) distal to the first damping diode (27).

17. The electronic device according to Claim 15 or 16, **characterized in that** a third damping diode (31) is provided between the cathode of the first damping diode (27) and the data processing electronics (3).

18. The electronic device according to one of Claims 15 to 17, **characterized in that** a third Zener diode (32) is provided between the cathode of the first damping diode (27) and the terminal of the data processing electronics (3) distal to the first damping diode (27).

## Revendications

1. Appareil électronique comme lien entre un système d'alimentation en énergie et de transmission de données d'une part et au moins un actionneur et/ou au moins un capteur d'autre part, comprenant un branchement bipolaire de système et d'appareils, une sortie d'alimentation bipolaire, une dissociation de données entre le branchement de système et d'appareils d'une part et la sortie d'alimentation d'autre part, une électronique de traitement de données reliée au branchement de système et d'appareils ainsi qu'une entrée et sortie de données multipolaires et raccordées à l'électronique de traitement de données,
**caractérisé en ce que**
une impédance supplémentaire (10) contrôlable par l'électronique de traitement de données (3) est montée en amont d'un pôle (9) de la sortie d' alimentation (2).

2. Appareil électronique selon la revendication 1, **caractérisé en ce que** l'impédance supplémentaire (10) est réalisée sous la forme d'une source négative de courant.

3. Appareil électronique selon la revendication 1 ou 2, **caractérisé en ce que** l'impédance supplémentaire (10) est contrôlable en fonction des besoins en courant.

4. Appareil électronique selon la revendication 3, **caractérisé en ce que** l'impédance supplémentaire (10) est commandée de telle sorte qu'on obtient une vitesse limitée d'accroissement de courant lors de la mise en route de l'impédance supplémentaire (10).

5. Appareil électronique selon la revendication 3 ou 4, **caractérisé en ce que** l'impédance supplémentaire (10) est commandée de telle sorte que, après une phase initiale avec un courant initial relativement élevé, il circule un courant permanent qui est sensiblement plus faible que le courant initial.

6. Appareil électronique selon la revendication 5, **caractérisé en ce que** l'impédance supplémentaire (10) est commandée de telle sorte que le passage du courant initial relativement élevé au courant permanent relativement faible s'effectue avec une vitesse limitée de baisse de courant.

7. Appareil électronique selon l'une quelconque des revendications 1 à 6, **caractérisé en ce que** l'impédance supplémentaire (10) peut être court-circuitée par un interrupteur de court-circuit (13) contrôlable et branché en parallèle avec l'impédance supplémentaire (10).

8. Appareil électronique selon la revendication 7, **caractérisé en ce qu'**une diode électroluminescente (14) est montée en parallèle avec l'impédance supplémentaire (10) et **en ce que** le montage en série constitué de l'impédance supplémentaire (10) et de la diode électroluminescente (14) peut être mis en court-circuit par l'interrupteur de court-circuit (13).

9. Appareil électronique selon la revendication 7 ou 8, **caractérisé en ce que** le tronçon de commande de l'impédance supplémentaire (10) contrôlable peut être commuté sans courant pour le temps pendant lequel l'impédance supplémentaire (10) est court-circuitée.

10. Appareil électronique selon l'une quelconque des revendications 1 à 9, une inductance étant prévue à chaque fois comme dissociation des données entre le branchement de système et d'appareils d'une part et la sortie d'alimentation d'autre part,
**caractérisé en ce que**
la sortie d'alimentation est commutable pendant une courte durée avant les inductances ou qu'une autre sortie d'alimentation (17) est prévue et l'autre sortie d'alimentation (17) est commutable pendant une courte durée avant les inductances (5).

11. Appareil électronique selon la revendication 10, **caractérisé en ce que** d'abord un pôle de la sortie d'alimentation ou un pôle (18) de l'autre sortie d'alimentation (17) et seulement ensuite le second pôle de la sortie d'alimentation ou le second pôle (19) de l'autre sortie d'alimentation (17) sont commutables pendant une courte durée avant l'inductance (5) attribuée.

12. Appareil électronique selon la revendication 10 ou 11, **caractérisé en ce que** d'une part le contact à ouverture (20) et d'autre part le contact à fermeture (21) d'un interrupteur inverseur (22) sont raccordés à chaque inductance (5) et les contacts principaux (23) des interrupteurs inverseurs (22) représentent la sortie d'alimentation et l'autre sortie d'alimentation (17).

13. Appareil électronique selon la revendication 10 ou 11, **caractérisé en ce que** le montage en série de deux interrupteurs de commutation (24, 25) est branché en parallèle avec chaque inductance (5) et les liaisons des deux interrupteurs de commutation (24, 25) représentent un pôle de la sortie d'alimentation ou respectivement un pôle (18, 19) de l'autre sortie d'alimentation (17).

14. Appareil électronique selon la revendication 13, **caractérisé en ce que** les interrupteurs de commutation (24, 25) faisant partie respectivement d'un montage en série sont verrouillés les uns par rapport aux autres de telle sorte que les deux interrupteurs de commutation (24, 25) ne peuvent pas être fermés simultanément.

15. Appareil électronique selon l'une quelconque des revendications 1 à 4, une inductance étant prévue à chaque fois comme dissociation des données entre le branchement de système et d'appareils d'une part et la sortie d'alimentation d'autre part et une diode de protection étant prévue entre le branchement de système et d'appareils d'une part et l'électronique de traitement de données d'autre part,
**caractérisé en ce que**
il est prévu au moins une autre diode de protection (29) et l'autre diode de protection (29) est branchée entre l'anode ou la cathode de la première diode de protection (27) d'une part et l'inductance (5) attribuée d'autre part.

16. Appareil électronique selon la revendication 15, **caractérisé en ce qu'**une autre diode de Zener (30) est prévue entre la liaison de l'autre diode de protection (29) et l'inductance (5) d'une part et le branchement, éloigné de la première diode de protection (27), de l'électronique de traitement de données (3) d'autre part.

17. Appareil électronique selon la revendication 15 ou 16, **caractérisé en ce qu'**une troisième diode de protection (31) est prévue entre la cathode de la première diode de protection (27) et l'électronique de traitement de données (3).

18. Appareil électronique selon l'une quelconque des revendications 15 à 17, **caractérisé en ce qu'**une troisième diode de Zener (32) est prévue entre la cathode de la première diode de protection (27) et le branchement, éloignée de la première diode de protection (27), de l'électronique de traitement de données (3).
